# EUROPEAN PATENT SPECIFICATION

(11) **EP 3 052 343 B1**
(45) Date of publication and mention of the grant of the patent: **03.01.2018**
(21) Application number: 14824951.9
(22) Date of filing: 02.10.2014
(51) Int. Cl.: B60R 7/06

(54) **A VEHICLE GLOVE BOX**
FAHRZEUGHANDSCHUHFACH
BOÎTE À GANTS DE VÉHICULE

(30) Priority: 03.10.2013 TR 201311626
(43) Date of publication of application: 10.08.2016
(73) Proprietor: Tofas Turk Otomobil Fabrikasi Anonim Sirketi, Bursa (TR)
(72) Inventor: YETKINER, Emrah, Bursa (TR)
(74) Representative: Dericioglu Kurt, Ekin
(86) International application number: PCT/TR2014/000356
(87) International publication number: WO 2015/050518

(56) References cited:
- EP-A1- 1 612 104
- DE-A1- 1 455 750
- FR-A3- 2 921 876
- KR-A- 20130 068 989

## Description

### Field of the Invention

The present invention relates to a vehicle glove box which features the use of life space by means of not taking any space during opening, furthermore which has lesser cost since it has less detail components and does not require an extra slowing mechanism.

### Background of the Invention

There are special compartments in the vehicles for keeping personal things. One of these is the glove box which is located on the front part of the front passenger seat. The glove box located therein is a closed space where the driver and the passengers can keeps their personal belongings easily since it can be reached easily and it can also be locked. In new generation vehicles today, cooling feature is added to the said space and the cold drinks can be maintained in the glove box by means of this feature. The covers of the glove boxed used today operate according to the system wherein it is opened being rotated around a point. The cover has one lock and the user has to continuously hold the said cover after releasing from the lock until they bring the cover to the fully open position. In case they leave, the cover comes to the opening position too fast and can damage the cover hinges. In case the cover is opened by rotating around a point, the cover hits the feet of the passenger sitting in the front seat and this situation both affects the comfort of the passenger and causes the living space to be limited. Even if the slowing mechanisms are manufactured for opening the cover in vehicles produced with advanced technology today, there no sliding glove box covers.

Japanese Patent Document no JPH0438239, an application known in the state of the art, discloses an opening-closing device for glove box in vehicles. The objective of the invention is to open a glove box with light force as well as to maintain such a state that has opened it in a simple means by installing a first guide part, tilting and guiding the glove box in front and in the rear, and an engaged means or the like regulating a 'full-open' position of the box. When a motor of the vehicle is rotated, a ball screw is rotated and driven via a gear transmission mechanism. A ball nut and a slide plate are shifted to the side of a front plate , and a support arm is shifted to the side of the front plate on a guide rail as one body with the slide plate. In addition, a globe box is shifted to the side of a car room as one body with the support arm, and another guide rail is supported by a guide roller and shifted to the car room side.

South Korean Patent Document no KR20120003685, an application known in the state of the art, discloses a glove box which can be opened and closed automatically. The glove box has an automatic opening and closing device comprising a body, a door unit, and an opening and closing unit. The body is mounted in a crash pad. The door unit makes hinge movement against the body. The opening and closing unit automatically opens and close the door unit and it is coupled to at least one side of the door unit. The opening and closing unit comprises an opening and closing rod, a driving motor, and a gear unit. The opening and closing rod makes linear movement and opens and closes the door unit. KR 10-2013-0068989 discloses a vehicle glove box according to the preamble of claim 1.

### Summary of the Invention

The objective of the present invention is to provide a vehicle glove box the opening and closing of which is provided via the rails and wheels, which has a simple system and low cost.

Another objective of the present invention is to provide a vehicle glove box which does not comprise extra element that bothers the user in the area inside the vehicle by means of not taking any space during opening.

Yet another objective of the present invention is to provide a glove box the opening of which is slowed down by means of the spring mounted on the rails.

Another objective of the present invention is to provide a vehicle glove box having a cover which has more advantageous cost with its simple locking system since it operates in Z axis.

A further objective of the present invention is to provide a vehicle glove box which has lower cost since it has less detail components and it does not require extra slowing mechanism.

### Detailed Description of the Invention

A vehicle glove box developed to fulfill the objective of the present invention is illustrated in the accompanying figure, in which:

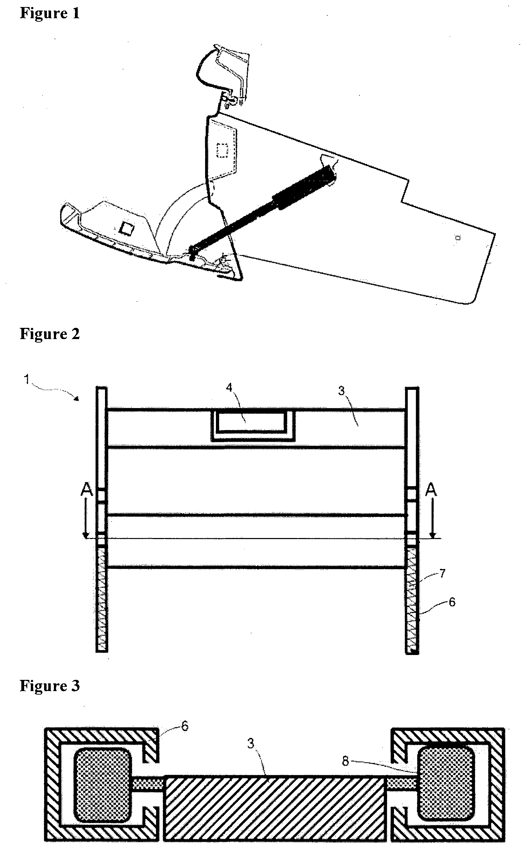

Figure 1 is the side view of the previous technique of the vehicle glove box.
Figure 2- is the front view of the vehicle glove box's cover in closed position.
Figure 3 is the cross sectional view of AA area of Figure 2.

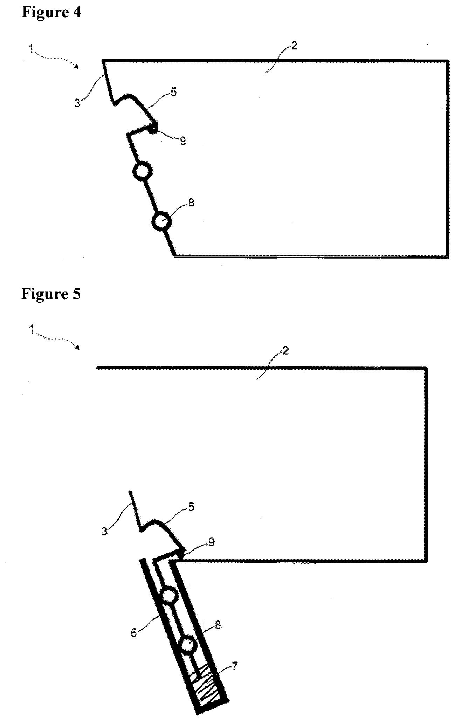

Figure 4- is the side view of the vehicle glove box's cover in closed position.
Figure 5- is the side view of the vehicle glove box's cover in open position.

The components shown in the figures are each given reference numbers as follows:
**1.** Vehicle glove box
**2.** Main body
**3.** Cover
**4.** Opening handle
**5.** Protrusion
**6.** Slot
**7.** Spring
**8.** Rotating member
**9.** Stopper

A vehicle glove box (1), which features the use of life space by means of not taking any space during opening, furthermore which has lesser cost since it has less detail components and does not require an extra slowing mechanism, essentially comprises
- at least one main body (2) which is located in front of the front passenger seat and which is positioned on the vehicle panel so that personal belongings are placed therein,
- at least one cover (3) which is positioned on passenger side so that stuff are placed inside the main body (2) and which can be opened and closed,
- at least one opening handle (4) which enables to open the cover (3) so that the inside of the main body (2) can be used,
- at least one protrusion (5) which is located on one part of the cover (3) and directed inside the main body (2),
- at least one slot (6) which is located on the lower part of the main body (2) towards which the cover (3) will move and into which the cover (3) enters when the cover (3) is opened via the opening handle (4),
- at least one spring (7) which located on the lower part of the slot (6) and which prevents the cover (3) from falling suddenly by generating a reactive force after the cover (3) is released after opening, and enables the cover (3) to be opened slowly,
- at least one rotating member (8) which is placed to the cover (3) so that the cover (3) moves inside the slot (6) without slipping,
- at least one stopper (9) which is located on the protrusion (5) and which enables the cover to stop safely after the cover (3) is fully opened.

In one embodiment of the invention, there is a main body (2) on the front panel of the vehicle or on the part where the front passenger seat is located. The main body (2) is hollow, and the stuff or food preferred by the driver and the passengers are placed therein. There is a cover (3) provided on the part of the main body (2) facing the passenger. The cover (3) is opened via the opening handle (4). The slot (6) is provided on the lower part of the cover (3). The said slot (6) is as large as the cover (3) can easily be fitted therein. When the cover (3) is preferred to be opened, the opening handle (4) is moved and a lock behind the opening handle (4) is released from a lock slot located in the main body (2). Then the cover (3) moves downwards parallel to the main body (2) and moves towards the slot (6). The movement of the cover (3) towards the slot (6) is carried out via the rotating members (8). By means of the rotating members (8) attached to the cover (3) rotating inside the slot (6), the cover (3) can easily move inside the slot (6) without being subjected to any friction. The spring (7) is provided on the lower part of the slot (6) and applies driving force to the cover (3). The driving force of the spring (7) is a little lower than the weight of the cover (3). By this means, the cover (3) is opened via the opening handle (4) and moves downwards, and contacts the spring (7) in the mean time, then it moves downwards slowly. The cover (3) moving downwards is terminated by the stopper (9). The stopper (9) is located at the end of the protrusion (5), and contacts the main body (2) when the cover (3) moves downwards and enables the cover (3) to be stopped.

The operation of the vehicle glove box (1) is carried out as follows: When the user prefers to open the vehicle glove box (1), the user contacts the opening handle (4) and stops the contact of the cover (3) with the main body (2). Then the cover (3) moves downwards due to its weight. This movement is carried out via the rotating members (8). After a while, the cover (3) contacts the spring (7) and thus moves inside the slot (6) slowly. The movement of the cover (3) continues until the stopper (9) contacts the main body (2) and the movement of the cover (3) is completed after the stopper (9) contacts the main body (2). By means of the cover (3) opening in this way instead of rotating around a point, the cover (3) does not contact the foot of the passenger in any way and it can be opened easily. Besides, it can easily be closed.

## Claims

1. A vehicle glove box (1) **comprising;**
- at least one main body (2) which is located in front of the front passenger seat and which is positioned on the vehicle panel so that personal belongings are placed therein,
- at least one cover (3) which is positioned on passenger side of the main body (2) so that stuff are placed inside the main body (2) and which can be opened and closed,
- at least one opening handle (4) which enables the user to open the cover (3) so that the inside of the main body (2) can be used,
- at least one slot (6) which is located on the lower part of the main body (2) towards which the cover (3) will move and into which the cover (3) enters when the cover (3) is opened via the opening handle (4),
- at least one spring (7) which located on the lower part of the slot (6) and which prevents the cover (3) from falling suddenly by generating a reactive force after the cover (3) is released after opening, and enables the cover (3) to be opened slowly,
**characterized by** - at least one rotating member (8) which is attached to the cover (3) so that the cover (3) moves inside the slot (6) without slipping, **wherein** the movement of the cover (3) inside the slot (6) is carried out via the rotating members (8).

2. A vehicle glove box (1) according to claim 1, **wherein** at least one protrusion (5) is located on one part of the cover (3) and directed inside the main body (2).

3. A vehicle glove box (1) according to any one of the preceding claims, **wherein** at least one stopper (9) is located on the protrusion (5) and which enables the cover to stop safely after the cover (3) is fully opened.

4. A vehicle glove box (1) according to any one of the preceding claims, **wherein** main body (2) is located on the front panel of the vehicle and on the part where the front passenger seat is located, is hollow and in which the stuff or drinks preferred by the driver and the passengers are placed.

5. A vehicle glove box (1) according to any one of the preceding claims, **wherein** cover (3) is located on the part of the main body (2) facing the passenger and which is opened via the opening handle (4).

6. A vehicle glove box (1) according to any one of the preceding claims, **wherein** slot (6) is located on the lower part of the cover (3) and which is as large as the cover (3) can be fitted therein.

7. A vehicle glove box (1) according to any one of the preceding claims, **wherein** cover (3) moves downwards parallel to the main body (2) and moves towards the slot (6).

8. A vehicle glove box (1) according to any one of the preceding claims, **wherein** spring (7) is located on the lower part of the slot (6) and applies driving force on the cover (3).

9. A vehicle glove box (1) according to any one of the preceding claims, **wherein** the driving force of spring (7) is a little lower than the weight of the cover (3) and thus which enables the cover (3) to move downwards slowly while the cover (3) is moving downwards by being opened via the opening handle (4).

10. A vehicle glove box (1) according to any one of the preceding claims, **wherein** stopper (9) is located at the end of the protrusion (5) and enables the cover (3) to be stopped by contacting the main body (2) when the cover (3) moves downwards.

11. A vehicle glove box (1) according to any one of the preceding claims, **wherein** the cover (3) contacts the spring (7) while moving inside the slot (6) and thus which enables it to move slowly inside the slot (6).

## Patentansprüche

1. Ein Fahrzeughandschuhfach (1) **bestehend aus;**
- mindestens einem Hauptkörper (2), das befindlich ist vor dem Beifahrersitz und das positioniert ist auf dem Fahrzeugpanel, sodaß persönliche Zugehörigkeiten dort hingelegt werden,
- mindestens einem Deckel (3), der positioniert ist auf der Beifahrerseite des Hauptkörpers (2), sodaß Stoffe im Innern des Hauptkörpers (2) hingelegt und der eröffnet und geschlossen werden kann,
- mindestens einem Öffnungsgriff (4), der ermöglicht dem Verwender, den Deckel (3) zu eröffnen, sodaß das Innere des Hauptkörpers (2) verwendet werden kann,
- mindestens einer Spalte (6), die befindlich ist auf dem Unterteil des Hauptkörpers (2), wogegen der Deckel (3) sich bewegen wird und wohin der Deckel (3) betritt, wenn der Deckel (3) geöffnet ist durch den Öffnungsgriff (4),
- mindestens einer Feder (7), die befindlich ist auf dem Unterteil der Spalte (6) und verhindert, daß der Deckel (3) plötzlich fallen wird durch Erzeugung einer Reaktionskraft nachdem der Deckel (3) entlassen wird nach Eröffnung und ermöglicht, daß der Deckel (3) langsam eröffnet wird, **dadurch gekennzeichnet, daß** es mindestens ein Drehelement (8) gibt, das beigefügt ist zum Deckel (3), sodaß sich der Deckel (3) bewegt im Innern der Spalte (6) ohne Rutschen, **wo** die Bewegung des Deckels (3) im Innern der Spalte (6) ausgeführt wird durch Drehelemente (8).

2. Ein Fahrzeughandschuhfach (1) nach Anspruch 1, **wo** mindestens ein Vorsprung (5) befindlich ist auf einem Teil des Deckels (3) und gerichtet ist zum Innern des Hauptkörpers (2).

3. Ein Fahrzeughandschuhfach (1) nach den vorhergehenden Ansprüche, **wo** mindestens ein Stopper (9) befindlich ist auf dem Vorsprung (5) und das ermöglicht, daß der Deckel in Sicherheit gestoppt wird, nachdem der Deckel (3) ganz eröffnet wird.

4. Ein Fahrzeughandschuhfach (1) nach den vorhergehenden Ansprüche, **wo** das Hauptkörper (2) befindlich ist auf dem Frontpanel des Fahrzeugs und auf dem Teil, wo der Beifahrersitz befindlich ist, ist hohl und wo die Stoffe oder Getränke, die vom Fahrer und Passagiere bevorzugt sind, hingelegt werden.

5. Ein Fahrzeughandschuhfach (1) nach den vorhergehenden Ansprüche, **wo** der Deckel (3) befindlich ist auf dem Teil des Hauptkörpers (2) gegen den Passagier und das sich eröffnet durch Öffnungsgriff (4).

6. Ein Fahrzeughandschuhfach (1) nach den vorhergehenden Ansprüche, **wo** die Spalte (6) befindlich ist auf dem Unterteil des Deckels (3) und das so groß ist, wo der Deckel (3) dorthin angepasst werden kann.

7. Ein Fahrzeughandschuhfach (1) nach den vorhergehenden Ansprüche, **wo** der Deckel (3) sich bewegt hinunter parallel zum Hauptkörper (2) und gegen die Spalte (6).

8. Ein Fahrzeughandschuhfach (1) nach den vorhergehenden Ansprüche, **wo** die Feder (7) befindlich ist auf dem Unterteil der Spalte (6) und ausübt Triebkraft auf den Deckel (3).

9. Ein Fahrzeughandschuhfach (1) nach den vorhergehenden Ansprüche, **wo** die Triebkraft der Feder (7) ein bißchen kleiner ist als das Gewicht des Deckels (3) und so ermöglicht, daß der Deckel (3) sich bewegt hinunter langsam, als der Deckel (3) sich bewegt hinunter durch Eröffnung mittels den Öffnungsgriff (4).

10. Ein Fahrzeughandschuhfach (1) nach den vorhergehenden Ansprüche, **wo** der Stopper (9) befindlich ist am Ende des Vorsprungs (5) und ermöglicht, daß der Deckel (3) gestoppt wird durch Kontaktierung den Hauptkörper (2), falls der Deckel (3) sich hinunter bewegt.

11. Ein Fahrzeughandschuhfach (1) nach den vorhergehenden Ansprüche, **wo** der Deckel (3) kontaktiert die Feder (7), als sie sich im Innern der Spalte (6) bewegt und so ermöglicht, daß sie langsam in der Spalte (6) bewegt.

## Revendications

1. Boîte à gants de véhicule (1) **comprenant;**
- au moins un corps principal (2) situé devant le siège du passager avant et qui est positionné sur le panneau du véhicule de manière à y placer des effets personnels,
- au moins un couvercle (3) qui est positionné sur le côté passager du corps principal (2) de sorte que des articles sont placés à l'intérieur du corps principal (2) et qui peut être ouvert et fermé,
- au moins une poignée d'ouverture (4) permettant l'utilisateur ouvre le couvercle (3) pour que l'intérieur du corps principal (2) puisse être utilisé,
- au moins une fente (6) qui est située sur la partie inférieure du corps principal (2) vers laquelle va se déplacer le couvercle (3) et dans laquelle pénètre le couvercle (3) lorsque le couvercle (3) est ouvert par l'ouverture poignée (4),
- au moins un ressort (7) situé sur la partie inférieure de la fente (6) et qui empêche la chute brutale du couvercle (3) en générant une force réactive après le dégagement du couvercle (3) après ouverture, et permet d'ouvrir le couvercle (3) lentement,
**caractérisé par** au moins un élément rotatif (8) qui est fixé au couvercle (3) de sorte que le couvercle (3) se déplace à l'intérieur de la fente (6) sans glisser, **dans laquelle** le mouvement du couvercle (3) à l'intérieur de la fente (6) est réalisé par l'intermédiaire des éléments rotatifs (8).

2. Boîte à gants de véhicule (1) selon la revendication 1, **dans laquelle** au moins une saillie (5) est située sur une partie du couvercle (3) et est dirigée à l'intérieur du corps principal (2).

3. Boîte à gants de véhicule (1) selon l'une quelconque des revendications précédentes, **dans laquelle** au moins une butée (9) est située sur la saillie (5) et qui permet au couvercle de s'arrêter après que le couvercle (3) est complètement ouvert.

4. Boîte à gants de véhicule (1) selon l'une quelconque des revendications précédentes, **dans laquelle** le corps principal (2) est situé sur le panneau avant du véhicule et sur la partie où se trouve le siège du passager avant, creux dans lequel ou les boissons préférées par le conducteur et les passagers sont placés.

5. Boîte à gants de véhicule (1) selon l'une quelconque des revendications précédentes, **dans laquelle** le couvercle (3) est situé sur la partie du corps principal (2) faisant face au passager et qui est ouvert par la poignée d'ouverture (4).

6. Boîte à gants de véhicule (1) selon l'une quelconque des revendications précédentes, **dans laquelle** la fente (6) est située sur la partie inférieure du couvercle (3) et qui est aussi grande que le couvercle (3) peut y être ajusté.

7. Boîte à gants de véhicule (1) selon l'une quelconque des revendications précédentes, **dans laquelle** le couvercle (3) se déplace vers le bas parallèlement au corps principal (2) et se déplace vers la fente (6).

8. Boîte à gants de véhicule (1) selon l'une quelconque des revendications précédentes, **dans laquelle** le ressort (7) est situé sur la partie inférieure de la fente (6) et applique une force d'entraînement sur le couvercle (3).

9. Boîte à gants de véhicule (1) selon l'une quelconque des revendications précédentes, **dans laquelle** la force d'entraînement du ressort (7) est légèrement inférieure au poids du couvercle (3) et ainsi permet au couvercle (3) de descendre lentement pendant que le couvercle (3) se déplace vers le bas en étant ouvert par la poignée d'ouverture (4).

10. Boîte à gants de véhicule (1) selon l'une quelconque des revendications précédentes, **dans laquelle** la butée (9) est situé à l'extrémité de la saillie (5) et permet d'arrêter le couvercle (3) par mise en contact le corps principal (2) lorsque le couvercle (3) se déplace vers le bas.

11. Boîte à gants de véhicule (1) selon l'une quelconque des revendications précédentes, **dans laquelle** le couvercle (3) entre en contact avec le ressort (7) en se déplaçant à l'intérieur de la fente (6) et lui permet ainsi de se déplacer lentement à l'intérieur de la fente (6).
